# EUROPEAN PATENT APPLICATION

(11) **EP 3 410 673 A1**
(43) Date of publication of application: **05.12.2018**
(21) Application number: 16886987.3
(22) Date of filing: 27.01.2016
(51) Int. Cl.: H04L 29/08

(54) **METHOD AND DEVICE FOR SENDING MAIL WHILE DOWNLOADING DATA**

(71) Applicant: Shenzhen Sekorm Advanced Technologies Co., Ltd., Shenzhen, Guangdong 518000 (CN)
(72) Inventor: XIAO, Qing, Shenzhen Guangdong 518000 (CN); ZHANG, Qing, Shenzhen Guangdong 518000 (CN)
(74) Representative: Westphal, Mussgnug & Partner Patentanwälte mbB
(86) International application number: PCT/CN2016/072305
(87) International publication number: WO 2017/128100

(57) **Abstract**

A method for sending a mail while downloading data, comprising the steps of: upon receipt of a data viewing request, a terminal sending the data viewing request to a server; the server sending, according to the data viewing request, data corresponding to the data viewing request to the terminal; upon receipt of the data, the terminal displaying the data in a display region of the terminal; the server sending, according to the data viewing request, the data corresponding to the data viewing request to a mailbox address in account information of the user who sent the data viewing request; and the server sending the data to a cloud storage account on the server. After the user views the data, the server sends the data to the mailbox of the user and to the cloud account to facilitate the user to view the data of products that have been browsed.

## Description

### TECHNICAL FIELD

The present invention relates to the computer field, and more particularly, relates to a method and device for sending a mail while downloading data.

### BACKGROUND

With the popularization and development of smart mobile phones, tablet computers and notebook computers, the mobile terminals have more and more functions, and the rich applications APPs satisfy people's various requirements and bring convenience to people's production and life. E-commerce has been rapidly developed in the internet age, and online shopping has gradually become people's new shopping way, such as, Taobao, JD Mall, etc.

When browsing the goods using a mobile terminal, in order to understand the detailed information of the goods, people have to view the product introduction of the goods, and the product introduction or the product specification of some products include a large amount of data information, such as, pictures, audio or video information, which will consume the user too much traffic and produce a large expense. In addition, a storage space of the mobile terminal is small, so that it cannot save large data information for a long time, and after the user finishes browsing, the browsing history cannot be automatically saved, which does not facilitate the user to understand the product information later.

### SUMMARY

With respect to the above deficiencies of the prior art, the technical problem to be solved by the present invention is to provide a method and device for sending a mail while downloading data.

The technical solution for solving the technical problem in the present invention is to provide a method for sending a mail while downloading data, comprising the steps of:
upon receipt of a data viewing request, a terminal sending the data viewing request to a server, the data viewing request containing account information of a user;
the server sending, according to the data viewing request, data corresponding to the data viewing request to the terminal;
upon receipt of the data, the terminal displaying the data in a display region of the terminal; and
the server sending, according to the data viewing request, the data corresponding to the data viewing request to a mailbox address in the account information of the user who sent the data viewing request.

Advantageously, the method for sending a mail while downloading data of the present invention further comprises:
the server creates, according to the account information of the user, a data storage account of the user correspondingly on the server;
the server saves, according to the data viewing request, the data corresponding to the data viewing request in the data storage account of the user; and
the user views the requested data by logging in the data storage account of the user on the server.

Advantageously, the method for sending a mail while downloading data of the present invention further comprises:
a file name of the data is the same as a name of the corresponding product, and the data is classified depending on the file name, or a product type, or a request time.

Advantageously, the method for sending a mail while downloading data of the present invention further comprises:
the data is a document file, or an audio file, or a video file;
when the data is the document file, a file format is at least one of a PDF document, a WORD document, a PPT document, an EXCEL document, and a webpage document.

Advantageously, the method for sending a mail while downloading data of the present invention further comprises:
when the data is the document file, and the document file is displayed by pages in a display area of the terminal, the data is automatically adapted to the display area of the terminal, and contents of the data are automatically separated into multiple pages for sequentially displaying by pages according to a size of the display area of the terminal;
the user switches display pages through a swiping operation on a screen, and performs a zooming operation on the document file through a zooming button.

In addition, the present invention further provides a device for sending a mail while downloading data, comprising:
a request unit configured to that upon receipt of a data viewing request, a terminal sends the data viewing request to a server, the data viewing request containing account information of a user;
a first sending unit configured to that the server sends, according to the data viewing request, data corresponding to the data viewing request to the terminal;
a first display unit configured to that upon receipt of the data, the terminal displays the data in a display region of the terminal; and
a second sending unit configured to that the server sends, according to the data viewing request, the data corresponding to the data viewing request to a mailbox address in the account information of the user who sent the data viewing request.

Advantageously, the device for sending a mail while downloading data of the present invention further comprises:
a cloud account unit configured to that the server creates, according to the account information of the user, a data storage account of the user correspondingly on the server;
a cloud storage unit configured to that the server saves, according to the data viewing request, the data corresponding to the data viewing request in the data storage account of the user; and
a viewing unit configured to that the user views the requested data by logging in the data storage account of the user on the server.

Advantageously, the device for sending a mail while downloading data of the present invention further comprises:
a classification unit configured to classify the data depending on a file name, or a product type, or a request time, the file name of the data being the same as a name of the corresponding product.

Advantageously, the device for sending a mail while downloading data of the present invention further comprises:
a second display unit configured to that when the data is a document file, and the document file is displayed by pages in a display area of the terminal, the data is automatically adapted to the display area of the terminal, and contents of the data are automatically separated into multiple pages for sequentially displaying by pages according to a size of the display area of the terminal;
a third display unit configured to that the user switches display pages through a swiping operation on a screen, and performs a zooming display on the document file through a zooming operation.

Advantageously, the device for sending a mail while downloading data of the present invention further comprises:
the terminal is one or more of a mobile phone, a tablet computer and a notebook computer.

Implementing the method and device for sending a mail while downloading data of the present invention can bring the following advantageous effects: the present invention discloses a method for sending a mail while downloading data, comprising the steps of: upon receipt of a data viewing request, a terminal sending the data viewing request to a server; the server sending, according to the data viewing request, data corresponding to the data viewing request to the terminal; the terminal receiving and displaying the data; the server sending, according to the data viewing request, the data corresponding to the data viewing request to a mailbox address in account information of the user who sent the data viewing request; and the server sending the data to a cloud storage account on the server. By implementing the invention, after the user views the data, the server sends the data to the mailbox of the user and to the cloud account to facilitate the user to view the data of products that have been browsed.

### BRIEF DESCRIPTION OF THE DRAWINGS

The present invention will be further explained below together with the drawings and embodiments.
FIG. 1 is a flow diagram of a method for sending a mail while downloading data according to the present invention.
FIG. 2 is a structure diagram of a device for sending a mail while downloading data according to the present invention.

### PREFERABLE EMBODIMENTS OF THE INVENTION

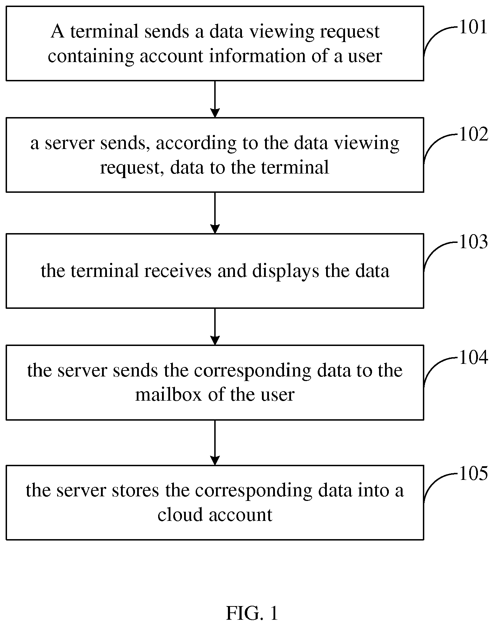

As shown in FIG. 1, it is the first embodiment of a method for sending a mail while downloading data according to the present invention.

The method for sending a mail while downloading data is applied in a terminal, wherein the terminal includes but not limited to a smart mobile phone, a tablet computer, a notebook computer, and the like, and the operating system of the terminal includes but not limited to Android operating system, IOS operating system, Windows Phone operating system, Windows operating system, and the like. As shown in FIG. 1, the method for sending a mail while downloading data comprises the steps of:
S101: upon receipt of a data viewing request, a terminal sends the data viewing request to a server, the data viewing request containing account information of a user;
S102: the server sends, according to the data viewing request, data corresponding to the data viewing request to the terminal;
S103: upon receipt of the data, the terminal displays the data in a display region of the terminal;
S104: the server sends, according to the data viewing request, the data corresponding to the data viewing request to a mailbox address in the account information of the user who sent the data viewing request.

The method for sending a mail while downloading data of the present invention further comprises:
S105: the server creates, according to the account information of the user, a data storage account of the user correspondingly on the server;
S106: the server saves, according to the data viewing request, the data corresponding to the data viewing request in the data storage account of the user; and
S107: the user views the requested data by logging in the data storage account of the user on the server.

The method for sending a mail while downloading data of the present invention, wherein it further comprises:
S108: a file name of the data is the same as a name of the corresponding product, and the data is classified depending on the file name, or a product type, or a request time, so as to facilitate the user to view later. For example, when the product is an electronic component, the data is classified according to a product category of the electronic component, and the same electronic component is classified in model number. Here, the data of the electronic component can be understood as product specification or product introduction video of the electronic component.

In the step S102, before sending, according to the data viewing request, data corresponding to the data viewing request to the terminal, it may be further comprises the steps of:
detecting network environment of the terminal, and if the network of the terminal is a WIFI mode of the wireless local area network, receiving the data sent from the server; if the network environment of the terminal is a mobile network, such as, 2G, or 3G, or 4G, in order to reduce traffic consumption of the user, feeding back the network environment of the user to the server, and the server sending pre-processed data to the terminal. The pre-processed data here refers to a new data formed after reserving importance information in the data, and deleting other information. For example, as for the document with both words and pictures, only word information in the data can be reserved; as for the data with both words and audios or videos, only word information is reserved; when there are audios or videos only, sound quality of the audios, or resolution of the videos is reduced.

In the step S101, after sending, upon receipt of the data viewing request, the data viewing request containing account information of a user to the server, it maybe further comprises the steps of:
upon receipt of the data viewing request sent from the terminal, the server counting all data viewing requests to form an accessing statistical data, and analyzing them, and the goods and service suppliers obtain the product information concerned by the user according to the accessing statistical data, thereby providing better service to the user, and optimizing their product layouts.

The method for sending a mail while downloading data of the present invention further comprises:
the data is a document file, or an audio file, or a video file;
when the data is the document file, a file format is at least one of a PDF document, a WORD document, a PPT document, an EXCEL document, and a webpage document.

The method for sending a mail while downloading data of the present invention further comprises:
when the data is the document file, and the document file is displayed by pages in a display area of the terminal, the data is automatically adapted to the display area of the terminal, and contents of the data are automatically separated into multiple pages for sequentially displaying by pages according to a size of the display area of the terminal;
the user switches display pages through a swiping operation on a screen, and performs a zooming operation on the document file through a zooming button.

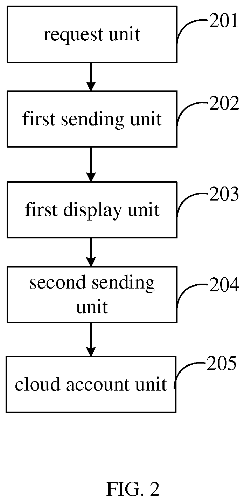

As shown in FIG. 2, it is the second embodiment according to the present invention.

This embodiment provides a device for sending a mail while downloading data, comprising:
a request unit 201 configured to that upon receipt of a data viewing request, a terminal sends the data viewing request to a server, the data viewing request containing account information of a user;
a first sending unit 202 configured to that the server sends, according to the data viewing request, data corresponding to the data viewing request to the terminal;
a first display unit 203 configured to that upon receipt of the data, the terminal displays the data in a display region of the terminal; and
a second sending unit 204 configured to that the server sends, according to the data viewing request, the data corresponding to the data viewing request to a mailbox address in the account information of the user who sent the data viewing request.

In the device for sending a mail while downloading data of the present invention, it further comprises:
a cloud account unit 205 configured to that the server creates, according to the account information of the user, a data storage account of the user correspondingly on the server;
a cloud storage unit configured to that the server saves, according to the data viewing request, the data corresponding to the data viewing request in the data storage account of the user; and
a viewing unit configured to that the user views the requested data by logging in the data storage account of the user on the server.

In the device for sending a mail while downloading data of the present invention, it further comprises:
a classification unit configured to classify the data depending on a file name, or a product type, or a request time, the file name of the data being the same as a name of the corresponding product.

In the device for sending a mail while downloading data of the present invention, it further comprises:
a second display unit configured to that when the data is a document file, and the document file is displayed by pages in a display area of the terminal, the data is automatically adapted to the display area of the terminal, and contents of the data are automatically separated into multiple pages for sequentially displaying by pages according to a size of the display area of the terminal;
a third display unit configured to that the user switches display pages through a swiping operation on a screen, and performs a zooming display on the document file through a zooming operation.

In the device for sending a mail while downloading data of the present invention, it further comprises:
a detecting unit configured to detect network environment of the terminal, and if the network of the terminal is a WIFI mode of a Wireless Local Area Network, receive the data sent from the server; if the network environment of the terminal is a mobile network, such as, 2G, or 3G, or 4G, in order to reduce traffic consumption of the user, feed back the network environment of the user to the server, and the server sends pre-processed data to the terminal. The pre-processed data here refers to a new data formed after reserving importance information in the data, and deleting other information. For example, as for the document with both words and pictures, only word information in the data can be reserved; as for the data with both words and audios or videos, only word information is reserved; when there are audios or videos only, sound quality of the audios, or resolution of the videos is reduced.

In the device for sending a mail while downloading data of the present invention, it further comprises:
a statistical unit configured to that upon receipt of the data viewing request sent from the terminal, the server counts all data viewing requests to form an accessing statistical data, and analyzes them, and the goods and service suppliers obtain the product information concerned by the user according to the accessing statistical data, thereby providing better service to the user, and optimizing their product layouts.

In the device for sending a mail while downloading data of the present invention, it further comprises:
the terminal is one or more of a mobile phone, a tablet computer and a notebook computer.
The third embodiment

In this embodiment, the method for sending a mail while downloading data is applied to an APP for selling electronic components. The application software APP is mainly used in a mobile client, such as, a smart mobile phone and a tablet computer, whose system is Android operating system, IOS operating system and Windows Phone operating system, and the APP is installed on the smart mobile phone or the tablet computer. When viewing the electronic components, firstly, the user opens the software APP, logs in the user account, finds the electronic components to be viewed through search or a product category, and then clicks ' viewing specifications of the electronic components', and upon receipt of a specification viewing request, the smart mobile phone or the tablet computer sends the specification viewing request to the server. The server stores the specifications of all electronic components, which are corresponding to the products. Of course, the specifications may be in a form of electronic documents, and also may be audio or video files. Upon receipt of the specification viewing request sent from the terminal, the server sends the corresponding specification to the terminal, and the terminal receives and displays the specification. Meanwhile, the server sends the specifications of the electronic components to a user mailbox, and the user's cloud account on the server. When viewing the data of the electronic components that have been viewed, the user can view through the mailbox or logging in the cloud account on the server, so as to improve user experience.

The above embodiments are only to illustrate the technical concept and characteristics of the present invention, and aim to enable those skilled in the art to understand and carry out the contents of the present invention without limiting the extent of protection of the present invention. Any equivalent changes and modifications made within the range of the claims of the present invention shall belong to the range covered by the claims of the present invention.

## Claims

1. A method for sending a mail while downloading data, comprising the steps of:
upon receipt of a data viewing request, a terminal sending the data viewing request to a server, the data viewing request containing account information of a user;
the server sending, according to the data viewing request, data corresponding to the data viewing request to the terminal;
upon receipt of the data, the terminal displaying the data in a display region of the terminal; and
the server sending, according to the data viewing request, the data corresponding to the data viewing request to a mailbox address in the account information of the user who sent the data viewing request.

2. The method for sending a mail while downloading data according to claim 1, wherein it further comprises:
the server creates, according to the account information of the user, a data storage account of the user correspondingly on the server;
the server saves, according to the data viewing request, the data corresponding to the data viewing request in the data storage account of the user; and
the user views the requested data by logging in the data storage account of the user on the server.

3. The method for sending a mail while downloading data according to claim 1 or 2, wherein it further comprises:
a file name of the data is the same as a name of the corresponding product, and the data is classified depending on the file name, or a product type, or a request time.

4. The method for sending a mail while downloading data according to claim 1, wherein it further comprises:
the data is a document file, or an audio file, or a video file;
when the data is the document file, a file format is at least one of a PDF document, a WORD document, a PPT document, an EXCEL document, and a webpage document.

5. The method for sending a mail while downloading data according to claim 4, wherein it further comprises:
when the data is the document file, and the document file is displayed by pages in a display area of the terminal, the data is automatically adapted to the display area of the terminal, and contents of the data are automatically separated into multiple pages for sequentially displaying by pages according to a size of the display area of the terminal;
the user switches display pages through a swiping operation on a screen, and performs a zooming operation on the document file through a zooming button.

6. A device for sending a mail while downloading data, comprising:
a request unit configured to that upon receipt of a data viewing request, a terminal sends the data viewing request to a server, the data viewing request containing account information of a user;
a first sending unit configured to that the server sends, according to the data viewing request, data corresponding to the data viewing request to the terminal;
a first display unit configured to that upon receipt of the data, the terminal displays the data in a display region of the terminal; and
a second sending unit configured to that the server sends, according to the data viewing request, the data corresponding to the data viewing request to a mailbox address in the account information of the user who sent the data viewing request.

7. The device for sending a mail while downloading data according to claim 6, wherein it further comprises:
a cloud account unit configured to that the server creates, according to the account information of the user, a data storage account of the user correspondingly on the server;
a cloud storage unit configured to that the server saves, according to the data viewing request, the data corresponding to the data viewing request in the data storage account of the user; and
a viewing unit configured to that the user views the requested data by logging in the data storage account of the user on the server.

8. The device for sending a mail while downloading data according to claim 6 or 7, wherein it further comprises:
a classification unit configured to classify the data depending on a file name, or a product type, or a request time, the file name of the data being the same as a name of the corresponding product.

9. The device for sending a mail while downloading data according to claim 8, wherein it further comprises:
a second display unit configured to that when the data is a document file, and the document file is displayed by pages in a display area of the terminal, the data is automatically adapted to the display area of the terminal, and contents of the data are automatically separated into multiple pages for sequentially displaying by pages according to a size of the display area of the terminal;
a third display unit configured to that the user switches display pages through a swiping operation on a screen, and performs a zooming display on the document file through a zooming operation.

10. The device for sending a mail while downloading data according to claim 6, wherein it further comprises:
the terminal is one or more of a mobile phone, a tablet computer and a notebook computer.
